# EUROPEAN PATENT APPLICATION

(11) **EP 4 823 191 A1**
(43) Date of publication of application: **14.10.2026**
(21) Application number: 23960599.1
(22) Date of filing: 08.12.2023
(51) Int. Cl.: H04W 52/08

(54) **SRS CLOSED-LOOP POWER CONTROL METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Zhe, Dongguan, Guangdong 523860 (CN); CHEN, Wenhong, Dongguan, Guangdong 523860 (CN)
(74) Representative: RGTH
(86) International application number: PCT/CN2023/137573
(87) International publication number: WO 2025/118288

(57) **Abstract**

A sounding reference signal (SRS) closed-loop power control method and apparatus, a device, and a storage medium, relating to the technical field of communications. The method comprises: when the power control of an SRS is independent of the power control of an uplink data channel, a terminal device keeps at least two sets of closed-loop power control adjustment states for the SRS (610). According to the method, when the power control of an SRS is independent of the power control of an uplink data channel, by keeping at least two sets of closed-loop power control adjustment states, the accuracy of the power control for the SRS can be improved.

## Description

### TECHNICAL FIELD

Embodiments of the present disclosure relate to the field of communication technologies, and in particular, to a method and apparatus for sounding reference signal (SRS) closed-loop power control, a device, and a storage medium.

### BACKGROUND

When a terminal device transmits an SRS, power control of the SRS is either consistent with or independent of power control of an uplink data channel.

In the related art, in a case where the power control of the SRS is independent of the power control of the uplink data channel, there is and only one closed-loop power control adjustment state set (or referred to as a "closed-loop PowerControlAdjustmentStates"). That is, in the related art, in a case where there are multiple nodes or devices for receiving the SRS, the closed-loop power control adjustment state in the power control of the SRS is unique.

Therefore, the closed-loop power control for the SRS needs further research.

### SUMMARY

Embodiments of the present disclosure provide a method and apparatus for SRS closed-loop power control, a device, and a storage medium. The technical solutions provided in the embodiments of the present disclosure are as follows.

According to an aspect of the embodiments of the present disclosure, an SRS closed-loop power control method is provided, where the method is performed by a terminal device and includes:
in a case where power control of an SRS is independent of power control of an uplink data channel, maintaining at least two closed-loop power control adjustment state sets for the SRS.

According to an aspect of the embodiments of the present disclosure, an SRS closed-loop power control method is provided, where the method is performed by a network device and includes:
in a case where power control of an SRS is independent of power control of an uplink data channel, transmitting first control information to a terminal device, the first control information being used for adjusting a transmit power of the SRS, where the first control information is used for determining a transmit power of an SRS corresponding to at least one closed-loop power control adjustment state set among at least two closed-loop power control adjustment state sets maintained by the terminal device.

According to an aspect of the embodiments of the present disclosure, an SRS closed-loop power control apparatus is provided, which includes:
a processing module, configured to maintain at least two closed-loop power control adjustment state sets for an SRS in a case where power control of the SRS is independent of power control of an uplink data channel.

According to an aspect of the embodiments of the present disclosure, an SRS closed-loop power control apparatus is provided, which includes:
a transmitting module, configured to transmit first control information to a terminal device in a case where power control of an SRS is independent of power control of an uplink data channel, the first control information being used for adjusting a transmit power of the SRS, where the first control information is used for determining a transmit power of an SRS corresponding to at least one closed-loop power control adjustment state set among the at least two closed-loop power control adjustment state sets maintained by the terminal device.

According to an aspect of the embodiments of the present disclosure, a communication device is provided, which includes: a processor and a memory, where the memory stores a computer program, and the processor is configured to execute the computer program to implement the above SRS closed-loop power control method on the terminal device side, or to implement the above SRS closed-loop power control method on the network device side.

According to an aspect of the embodiments of the present disclosure, a computer-readable storage medium is provided, which stores a computer program, where the computer program is configured to, when executed by a processor, implement the above SRS closed-loop power control method on the terminal device side, or to implement the above SRS closed-loop power control method on the network device side.

According to an aspect of the embodiments of the present disclosure, a computer program product is provided, which includes computer instructions, where the computer instructions are stored in a computer-readable storage medium, and a processor reads the computer instructions from the computer-readable storage medium and executes the computer instructions to implement the above SRS closed-loop power control method on the terminal device side, or to implement the above SRS closed-loop power control method on the network device side.

The technical solutions provided in the embodiments of the present disclosure can include the following beneficial effects.

In the case where the power control of the SRS is independent of the power control of the uplink data channel, through the terminal device maintaining the at least two closed-loop power control adjustment state sets for the SRS, the terminal device can perform power control on the SRS using different closed-loop power control adjustment states. For example, for different nodes or devices having the uplink receiving functions, a suitable closed-loop power control adjustment state can be selected from the at least two closed-loop power control adjustment state sets to adjust the transmit power of the SRS, thereby improving the accuracy of power control.

### BRIEF DESCRIPTION OF THE DRAWINGS

FIG. 1 is a schematic diagram illustrating architecture of a communication system provided in embodiments of the present disclosure.
FIG. 2 is a schematic diagram illustrating architecture of another communication system provided in embodiments of the present disclosure.
FIG. 3 is a schematic diagram illustrating architecture of another communication system provided in embodiments of the present disclosure.
FIG. 4 is a schematic diagram of a unified transmission configuration indicator (transceiver control interface, TCI) state activation/deactivation media access control-control element (MAC CE) provided in an embodiment of the present disclosure.
FIG. 5 is a schematic diagram illustrating a scenario of combined usage of an uplink transmitter receiver point (TRP) and a downlink TRP provided in an embodiment of the present disclosure.
FIG. 6 is a flowchart of an SRS closed-loop power control method provided in an embodiment of the present disclosure.
FIG. 7 is a flowchart of an SRS closed-loop power control method provided in another embodiment of the present disclosure.
FIG. 8 is a block diagram of an SRS closed-loop power control apparatus provided in an embodiment of the present disclosure.
FIG. 9 is a block diagram of an SRS closed-loop power control apparatus provided in another embodiment of the present disclosure.
FIG. 10 is a schematic structural diagram of a terminal device provided in an embodiment of the present disclosure.
FIG. 11 is a schematic structural diagram of a network device provided in an embodiment of the present disclosure.

### DETAILED EMBODIMENTS

To make the objectives, technical solutions, and advantages of the present disclosure clearer, the embodiments of the present disclosure will be described in further detail below with reference to the drawings.

The network architecture and service scenario described in the embodiments of the present disclosure are intended to describe the technical solutions of the embodiments of the present disclosure more clearly, but do not constitute a limitation on the technical solutions provided in the embodiments of the present disclosure. A person of ordinary skill in the art will understand that with the evolution of the network architecture and the emergence of new service scenarios, the technical solutions provided in the embodiments of the present disclosure are also applicable to similar technical problems.

The technical solutions of the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a 5th-generation (5G) system, a beyond 5G (B5G) system, a 6th-generation (6G) system, or other communication systems.

Generally, the number of connections supported by a traditional communication system is limited and is easy to implement. However, with the development of communication technologies, a mobile communication system will not only support traditional communication but also support, for example, device to device (D2D) communication, machine to machine (M2M) communication, machine type communication (MTC), vehicle to vehicle (V2V) communication, or vehicle to everything (V2X) communication. The embodiments of the present disclosure may also be applied to these communication systems.

The communication system in the embodiments of the present disclosure may be applied to a scenario of carrier aggregation (CA), or may be applied to a scenario of dual connectivity (DC), or may be applied to a scenario of standalone (SA) deployment.

The communication system in the embodiments of the present disclosure may be applied to an unlicensed spectrum, where the unlicensed spectrum may also be considered as a shared spectrum. Alternatively, the communication system in the embodiments of the present disclosure may also be applied to a licensed spectrum, where the licensed spectrum may also be considered as a non-shared spectrum.

The embodiments of the present disclosure may be applied to a non-terrestrial network (NTN) system, and may also be applied to a terrestrial network (TN) system. NTN generally provides communication services to a terrestrial user via satellite communication. The NTN system currently includes an NR-NTN system and an IoT-NTN system, and may include other NTN systems in the future.

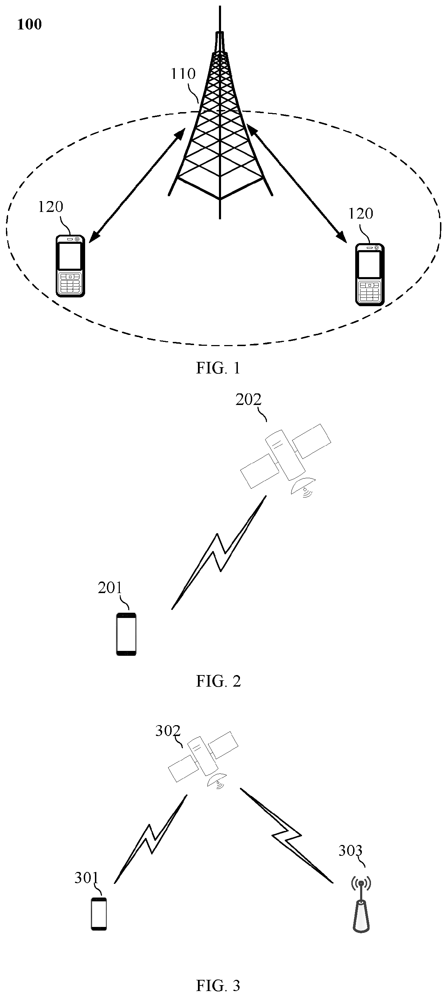

Exemplarily, FIG. 1 is a schematic diagram illustrating architecture of a communication system provided in the present disclosure. As illustrated in FIG. 1, the communication system 100 may include a network device 110, which may be a device that communicates with terminal devices 120. The network device 110 can provide communication coverage for a specific geographical area and can communicate with terminal devices located within the coverage area.

FIG. 1 exemplarily illustrates a network device 110 and two terminal devices 120. In some embodiments of the present disclosure, the communication system 100 may include multiple network devices, and the coverage range of each network device may include terminal devices of other quantities, which are not limited in the embodiments of the present disclosure.

Exemplarily, FIG. 2 is a schematic diagram illustrating architecture of another communication system provided in the embodiments of the present disclosure. Referring to FIG. 2, the communication system may include a terminal device 201 and a satellite 202, and wireless communication may be performed between the terminal device 201 and the satellite 202. The network formed between the terminal device 201 and the satellite 202 may also be referred to as an NTN. In the architecture of the communication system illustrated in FIG. 2, the satellite 202 may have the function of a base station, and the terminal device 201 may communicate with the satellite 202 directly. Under the system architecture, the satellite 202 may be referred to as a network device. In some embodiments of the present disclosure, the communication system may include multiple satellites 202, and the coverage range of each network satellite 202 may include terminal devices of other quantities, which are not limited in the embodiments of the present disclosure.

Exemplarily, FIG. 3 is a schematic diagram illustrating architecture of another communication system provided in the embodiments of the present disclosure. Referring to FIG. 3, the communication system includes a terminal device 301, a satellite 302, and a base station 303, where wireless communication may be performed between the terminal device 301 and the satellite 302, and communication may be performed between the satellite 302 and the base station 303. The network formed among the terminal device 301, the satellite 302, and the base station 303 may also be referred to as an NTN. In the architecture of the communication system illustrated in FIG. 3, the satellite 302 may not have the function of a base station, and communication between the terminal device 301 and the base station 303 requires relaying through the satellite 302. Under this type of system architecture, the base station 303 may be referred to as a network device. In some embodiments of the present disclosure, the communication system may include multiple base stations 303, each of which may communicate with one or more satellites 302, and the coverage range of each satellite 302 may include terminal devices of other quantities, which are not limited in the embodiments of the present disclosure.

In future evolved communication systems such as beyond 5G (B5G) or 6G, scenarios of distributed multiple-input multiple-output (distributed MIMO, also referred to as a distributed antenna system) and/or massive multiple-input multiple-output (massive MIMO, also referred to as a massive antenna array system) may also be included. In some cases, the distributed MIMO and/or massive MIMO may also support cell-free or UE-centric networking scenarios. It should be understood that the above-mentioned scenarios are also applicable to a TN and/or NTN.

The terminal device mentioned in the embodiments of the present disclosure may refer to user equipment (UE), an access terminal, a user unit, a user station, a mobile station, a mobile platform, a remote station, a remote terminal, a mobile device, a wireless communication device, a user agent, or a user apparatus. Optionally, the terminal device 10 may also be a cellular telephone; a cordless telephone; a session initiation protocol (SIP) phone; a wireless local loop (WLL) station; a personal digital assistant (PDA); a handheld device or a computing device having a wireless communication function; or other processing devices, in-vehicle devices, or wearable devices connected to a wireless modem; a terminal device in a 5th generation system (5GS); or a terminal device in a future evolved public land mobile network (PLMN), the embodiments of the present disclosure are not limited thereto. For convenience of description, the above-mentioned devices are collectively referred to as terminal devices. In the embodiments of the present disclosure, "terminal device" and "UE" are often used interchangeably, but a person skilled in the art can understand that the two can express the same meaning.

The network device mentioned in the embodiments of the present disclosure may be an access network device, which may be located on the ground or on a satellite. The access network device is a device deployed in an access network to provide the wireless communication function for a terminal device. The access network device may include various forms of macro base stations, micro base stations, relay stations, access points, and so on. In systems adopting different radio access technologies, the name of the device having the function of the access network device may vary, for example, referred to as a gNodeB or gNB in the 5G NR system. With the evolution of communication technologies, the name "access network device" may change. For convenience of description, in the embodiments of the present disclosure, the above-mentioned apparatuses that provide the wireless communication function for the terminal device are collectively referred to as access network devices. Optionally, a communication relationship may be established between a terminal device and a core network device through an access network device.

The "5G NR system" in the embodiments of the present disclosure may also be referred to as a 5G system or an NR system, whose meaning can be understood by a person skilled in the art. The technical solutions described in the embodiments of the present disclosure may be applicable to the LTE system, may also be applicable to the 5G NR system, may also be applicable to subsequent evolved systems of the 5G NR system (e.g., the B5G system, and the 6G system), and may also be applicable to other communication systems such as a narrow band Internet of Things (NB-IoT) system, the present disclosure is not limited thereto.

In the embodiments of the present disclosure, the network device may provide services for a cell, and a terminal device performs communication with the network device through transmission resources (e.g., frequency-domain resources, or in other words, spectrum resources) on a carrier utilized by the cell. The cell may be a cell corresponding to the network device (e.g., a base station), and the cell may belong to a macro base station or belong to a base station corresponding to a small cell. Here, the small cell may include a metro cell, a micro cell, a pico cell, a femto cell, etc. In the embodiments of the present disclosure, in a case where power control of an SRS is independent of power control of an uplink data channel, a terminal device maintains at least two closed-loop power control adjustment state sets for the SRS.

Uplink SRS closed-loop power control is explained below.

In the communication system, it is possible to support a special type of TRP, i.e., an uplink TRP (Up-Link TRP, UL TRP). The TRP only has the capability to receive an uplink transmission and does not have the capability for a downlink transmission. This deployment has many advantages. For example, 1) a network (NW) can deploy a UL-TRP closer to a UE, so that an expected received power can be reached by reducing the transmit power of the UE. In this case, the NW can deploy more UL TRPs to reduce the distance between the UE and the TRP, thus enhancing the uplink coverage capability without increasing the complexity of the UE. 2) In a case where the UE is closer to an UL-TRP of the UE, uplink interference between multiple users can be reduced. 3) For a frequency division duplex (FDD) system, the uplink TRP can only implement the reception capability of the uplink spectrum in FDD, and does not require the transmission capability of the downlink spectrum, thereby reducing the cost in manufacturing and deployment.

An uplink TRP has no capability for downlink transmission, including a physical downlink control channel (PDCCH), a physical downlink shared channel (PDSCH), a channel state information-reference signal (CSI-RS), and a synchronization signal and physical broadcast channel (PBCH) block (SSB); and only supports a transmission for an uplink channel and/or an uplink signal.

Unified TCI state is explained below.

In the standardization progress of the 3rd generation partnership project (3GPP), the concept of a TCI state is proposed, which is used for an indication of downlink spatial information (QCL-Type D), and a delivery of quasi co-location (QCL) information (QCL-Type A, QCL-Type B, and QCL-Type C) in time domain and/or frequency domain. Specifically, a QCL relationship may be simply described as a large-scale fading relationship from a certain source reference signal to a target reference signal. For beam indication (QCL-Type D), after obtaining, from the NW, the QCL relationship between the source reference signal and the target reference signal, the UE may use a receive beam previously used for receiving the source reference signal when receiving the target reference signal. Assuming that the radio channel property of one antenna port can be inferred from the radio channel property of another antenna port, the two antenna ports are quasi co-located. That is, whether two antenna ports are quasi co-located depends on whether the radio channel properties of the two antenna ports are the same (or similar). Common radio channel properties at an antenna port include a Doppler spread/shift, an average delay, a delay spread, an average gain, and a spatial receiver parameter. These properties are referred to as "large-scale properties".

However, the indication mechanism of the TCI state is only applicable to a downlink channel and a downlink signal, and has many limitations in application in an NR system. In addition, the design is too flexible and incurs a large signaling overhead, for example, always transmitting TCI state identification (ID) in downlink control information (DCI) scheduling. To provide a unified uplink and downlink beam management mechanism for the NR system, 3GPP proposed the concept of the unified TCI state on the basis of the existing design for the TCI state, which adds important new features. Examples are as follows.
1) Three modes of unified TCI state are designed, that is, a joint TCI state is applicable to a channel and a signal in uplink and downlink; a DL TCI state is applicable only to a channel and a signal in downlink; and an UL TCI state is applicable only to a channel and a signal in uplink.
2) A downlink channel (a part of PDCCHs or PDSCHs) and a downlink signal (aperiodic CSI-RS) use the same downlink transmission indication beam, with the use of the DL TCI state or the joint TCI state.
3) An uplink channel (PUCCH, PUSCH) and an uplink signal (SRS) use the same uplink transmission beam, with the use of the UL TCI state or the joint TCI state.
4) The unified TCI state may be indicated by radio resource control (RRC) signaling, and/or a MAC CE, and/or DCI format 1_1/DCI format 1_2 (carrying downlink scheduling information or not carrying downlink scheduling information).
5) In the scenario of carrier aggregation (CA), a beam indication on a single CC (call control, CC) may be simultaneously applied to multiple different CCs (these CCs sharing the common beam are configured by the NW into a CC list).
6) An uplink beam indication and an uplink power control parameter may be provided simultaneously via the UL TCI state or the joint TCI state.
7) Inter-cell beam management function is supported.

As the name "unified TCI state" suggests, the term "unified" has multiple layers of meaning. The first layer of "unified" meaning is that it unifies the uplink and downlink beam indication mechanisms, because in the 3GPP NR standard, the TCI state is only used for downlink beam indication while the uplink beam indication uses signaling based on spatial relation information. The second layer of "unified" meaning refers to beam unification between different channels. For example, under a separate DL/UL TCI state configuration, the UE considers that a downlink PDCCH (UE-specific) and PDSCH (UE-specific) are unified to be transmitted with the same beam. In addition, the UE transmits an uplink physical uplink control channel (PUCCH) and physical uplink shared channel (PUSCH) using the same beam. Under a joint TCI state configuration, the UE considers that different channels and signals in uplink and downlink may have a good guarantee of beam symmetry, that is, using a symmetric beam pair for communications in the uplink and downlink.

Regarding the application of the unified TCI state under a single transmission reception point (STRP), Release 18 (R18) supports the indication of the unified TCI state for multiple transmission reception points (MTRPs). However, due to system complexity, only indicating 2 TCI states and/or 2 pairs of TCI states is currently supported.

From the signaling perspective, the unified TCI state involves an RRC configuration, MAC CE activation/deactivation, and/or a dynamic DCI indication.

In case of configuring a TCI state using RRC, if an SRS is configured to use an indicated uplink/joint TCI state, then when transmitting the SRS, the UE also uses an uplink power control parameter associated with the TCI state.

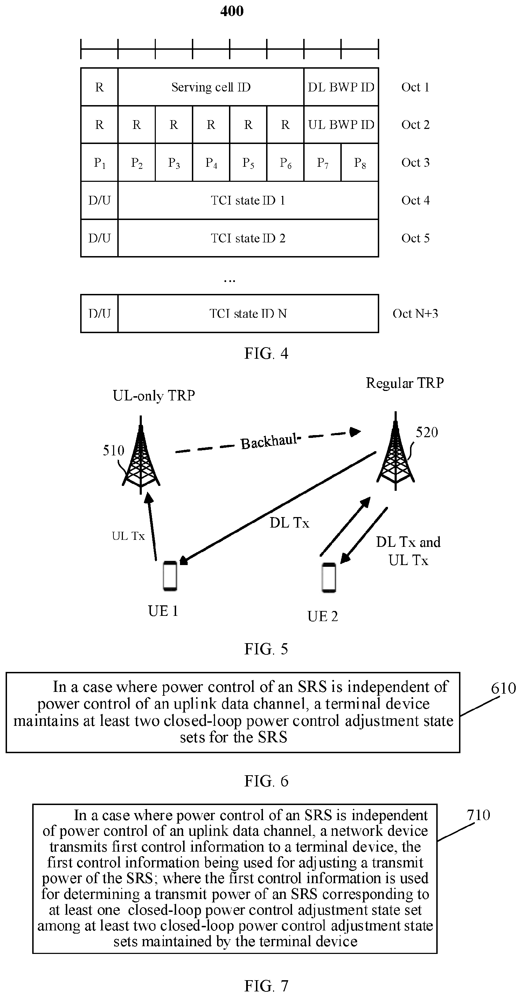

In case of activating/deactivating a TCI state using a MAC CE, the structure and description of the MAC CE are as follows. As illustrated at 400 in FIG. 4, the unified TCI state activation/deactivation MAC CE is identified by a MAC subheader with an eLCID, has a variable size and consists of the following fields.

Serving cell ID: this field indicates the identity of the serving cell for which the MAC CE applies. The length of the field is 5 bits. If the indicated serving cell is configured as part of a *simultaneousU-TCI-UpdateList1*, *simultaneousU-TCI-UpdateList2*, *simultaneousU-TCI-UpdateList3* or *simultaneousU-TCI-UpdateList4* as specified in TS 38.331 [5], this MAC CE applies to all the serving cells in the set *simultaneousU-TCI-UpdateList1*, *simultaneousU-TCI-UpdateList2*, *simultaneousU-TCI-UpdateList3* or *simultaneousU-TCI-UpdateList4*, respectively.

DL BWP ID: this field indicates a DL BWP for which the MAC CE applies as the codepoint of the DCI *bandwidth part indicator* field as specified in TS 38.212 [9]. The length of the BWP ID field is 2 bits.

UL BWP ID: this field indicates a UL BWP for which the MAC CE applies as the codepoint of the DCI *bandwidth part indicator* field as specified in TS 38.212 [9]. If the value of *unifiedTCI-StateType* in the serving cell indicated by the serving cell ID is *joint*, this field is considered as reserved bits. The length of the BWP ID field is 2 bits.

Pi (Pᵢ): this field indicates whether each TCI codepoint has multiple TCI states or a single TCI state. If the Pᵢ field is set to 1, it indicates that the i^{th} TCI codepoint includes the DL TCI state and the UL TCI state. If the Pᵢ field is set to 0, it indicates that the i^{th} TCI codepoint includes only the DL/joint TCI state or the UL TCI state. The codepoint to which a TCI state is mapped is determined by its ordinal position among all the TCI state ID fields.

D/U: this field indicates whether the TCI state ID in the same octet is for a joint/downlink or uplink TCI state. If this field is set to 1, the TCI state ID in the same octet is for joint/downlink. If this field is set to 0, the TCI state ID in the same octet is for uplink.

TCI state ID: this field indicates the TCI state identified by *TCI-StateId* as specified in TS 38.331 [5]. If D/U is set to 1, a 7-bit length TCI state ID, i.e., *TCI-StateId* as specified in TS 38.331 [5], is used. If D/U is set to 0, the most significant bit of the TCI state ID is considered the reserved bit and the remainder 6 bits indicate the *TCI-UL-State-Id* as specified in TS 38.331 [5]. The maximum number of activated TCI states is 16.

In case where the DCI indicates a TCI state, the NW uses the TCI state field in DCI format 1_1 or DCI format 1_2 to indicate the TCI state(s) the UE shall use. For example, in a case where the TCI state field indicates "000" as a codepoint, it corresponds to the first TCI State ID 1 activated by the MAC CE. For another example, "111" is another codepoint, which corresponds to the last TCI State ID 8 activated by the MAC CE.

In general, after an uplink/joint TCI state is activated and indicated by a MAC CE and/or DCI, after a beam application time, the indicated TCI state becomes the TCI state to be used for the transmission of uplink channel and uplink signal, and is used for determining the uplink transmission spatial filter and uplink transmit power.

The power control of the uplink channel and the uplink signal is explained below.

The calculation formula and parameters for uplink power control of the PUSCH is first introduced. The PUSCH power control mechanism includes two parts: open-loop power control and closed-loop power control. Open-loop power control parameters are configured or reconfigured by the network via RRC higher-layer signaling, representing a slow and semi-static power control adjustment. Closed-loop power control enables a rapid power adjustment via physical layer signaling DCI.

The calculation for the PUSCH power control may be expressed by the following formula: $\begin{matrix}{P}_{PUSCH , b , f , c} \left(i, j, {q}_{d}, l\right) = \\ min \left\{\begin{matrix}{P}_{CMAX , f , c} \left(i\right) , \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \\ \left[dBm\right] ;\end{matrix}$ where *b* represents a bandwidth part (BWP); *f* represents a carrier (an uplink carrier or a supplementary UL (SUL) carrier within the cell); c represents a serving cell; i represents a transmission occasion; j represents an parameter configuration index, for example, different service scenarios correspond to different parameter configuration indices, such as a parameter configuration index 0 for the voice call scenario and a parameter configuration index 1 for the video call scenario; *q_{d}* is the index of the reference signal used for pathloss measurement; and *l* is the index of the closed-loop power control adjustment state.

The open-loop power control parameter in the above expression includes: *P*_{O_PUSCH,*b,f,c*}(*j*), the target received power; *α_{b,f,c}*(*j*)*,* the weighting factor for pathloss; and *PL_{b,f,c}*(*q_{d}*), the pathloss value measured based on the reference signal used for pathloss measurement.

The closed-loop power control parameter in the above expression includes: *f_{b,f,c}*(*i, l*), the closed-loop power control adjustment state, which includes accumulated closed-loop power control (acting on the power control accumulated value via an accumulator) and absolute closed-loop power control (acting directly on the power control adjustment value).

Other power control parameters in the above expression include: *P*_{CMAX,*f,c*}(*i*)*,* the maximum transmit power of the terminal device on a carrier *f* of a serving cell c; and ${M}_{RB , b , f , c}^{PUSCH} \left(i\right)$*,* the transmission bandwidth of the PUSCH (number of RBs allocated by the resource allocation). In a case where the DCI includes an SRS resource indication (SRI) field, and when NR supports configuring, via RRC signaling, a mapping relationship among the open-loop power parameter, the closed-loop power parameter and the SRI field that is included in the DCI, the open-loop power parameter and the closed-loop power parameter are indicated via the state in the SRI field included in the DCI. *PL_{b,f,c}*(*q_{d}*) represents the pathloss, where *PL_{b,f,c}*(*q_{d}*)=*referenceSignalPower* - higher layer filtered RSRP. Here, the "higher layer filtered RSRP" is the RSRP of higher layer filtering, and the RSRP is measured by the terminal device based on downlink reference signal. The higher-layer parameter *referenceSignalPower* is determined as follows. In a case were the terminal device is not configured with periodic CSI-RS reception, the higher-layer parameter *referenceSignalPower* is determined through *ss-PBCH-BlockPower,* where *ss-PBCH-BlockPower* is the SSB transmit power. In a case where the terminal device is configured with periodic CSI-RS reception, the higher-layer parameter *referenceSignalPower* is determined according to *ss-PBCH-BlockPower* or determined according to *ss-PBCH-BlockPower* and *powerControlOffsetSS,* where *powerControlOffsetSS* is the power offset of the CSI-RS transmit power relative to the SSB transmit power. The interpretation of the formula is as follows: *referenceSignalPower* is the transmit power of the downlink reference signal transmitted by the network device. The higher layer filtered RSRP is the received power of the terminal device for receiving the downlink reference signal transmitted by the network device. The difference between the two (the transmit power and the received power) constitutes the pathloss.

Regarding SRS power control, ${P}_{SRS , b , f , c} \left(i, {q}_{s}, l\right) =$ $min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\} \left[dBm\right]$. In TS 38.213, the transmit power of the SRS includes two parts: open-loop power control (P0, PL) and closed-loop power control (h). Here, *qₛ* is the index of the SRS resource set; and *h_{b,f,c}*(*i, l*) is the adjustment state of the SRS closed-loop power control. The power control of the SRS is performed based on an SRS resource set, where SRS resources within an SRS resource set adopt the same power control parameter. The SRS resource set index for open-loop power control parameters *P*_{O_SRS*,b,f,c*}(*qₛ*) and *α*_{SRS}*_{,b,f,c}(qₛ*), and the reference signal index for calculating the pathloss *PL_{b,f,c}*(*q_{d}*) are all configured based on the resource set and configured via RRC signaling. In addition to the above method, with the introduction of the concept of the unified TCI state in R17, each uplink/joint TCI state can include a power control parameter set, e.g., P0, alpha, and CLI. *h_{b,f,c}*(*i, l*) may be indicated by RRC signaling to either use the same closed-loop power control adjustment state as the most recent PUSCH in the time domain or to use a separate closed-loop power control adjustment state.

In the related art, *f_{b,f,c}*(*i, l*) is the current PUSCH power control adjustment state. For the SRS power control adjustment state for an active UL BWP b of the carrier f of the serving cell c and an SRS transmission occasion i, if the SRS power control adjustment state *(srs-PowerControlAdjustmentStates)* indicates the same power control adjustment state for SRS transmissions and PUSCH transmissions, then *h_{b,f,c}*(*i, l*) *= f_{b,f,c}*(*i, l*), where *f_{b,f,c}*(*i, l*) is the current PUSCH power control adjustment state as described in clause 7.1.1.

Alternatively, if the UE is not configured for PUSCH transmissions on the active UL BWP b of the carrier f of the serving cell c, or if the SRS power control adjustment state *(srs-PowerControlAdjustmentStates)* indicates separate power control adjustment states between SRS transmissions and PUSCH transmissions, and if transmit power control (TPC) accumulation (*tpc-Accumulation*) is not provided, then ${h}_{b , f , c} \left(i\right) = {h}_{b , f , c} \left(i-{i}_{0}\right) + {\sum }_{m = 0}^{c \left({S}_{i}\right) - 1} {δ}_{SRS , b , f , c} \left(m\right)$. The values of *δ*_{SRS,*b,f,c*} are given in Table 7.1.1-1. ${\sum }_{m = 0}^{c \left({S}_{i}\right) - 1} {δ}_{SRS , b , f , c} \left(m\right)$ is the sum of TPC command values in a set *Sᵢ* of TPC command values with cardinality C(*Sᵢ*) that the UE receives between *K*_{SRS}(*i* - *i*₀) - 1 symbols before SRS transmission occasion *i - t*₀ and *K*_{SRS}(*i*) symbols before SRS transmission occasion i on the active UL BWP b of the carrier f of the serving cell c for the SRS power control adjustment state, where *i*₀ > 0 is the smallest integer before *K*_{SRS}(*i*) symbols (where *i*₀ > 0 is the smallest integer for which *K*_{SRS}(*i*) symbols before SRS transmission occasion *i - i*₀ is earlier than *K*_{SRS}*(i* - *i*₀) symbols before SRS transmission occasion i).

Alternatively, if the UE is not configured for PUSCH transmissions on the active UL BWP b of the carrier f of the serving cell c, or if the SRS power control adjustment state (*srs-PowerControlAdjustmentStates*) indicates separate power control adjustment states between SRS transmissions and PUSCH transmissions, and TPC accumulation (*tpc-Accumulation*) is provided, then *h_{b,f,c}*(*i*) *= δ*_{SRS*,b,f,c*}(*i*). Here, the UE detects a DCI format 2_3 in *K*_{SRS,min} symbols before the first symbol of the SRS transmission occasion i (where absolute values of *δ*_{SRS,*b,f,c*} are provided in Table 7.1.1-1).

The power control for the SRS via the DCI format 2_3 is introduced below. The DCI format 2_3 is scrambled by a special cyclic redundancy check (CRC), i.e., TPC-SRS-RNTI, and the transmitted content is as follows: -block number 1, block number 2, ..., and block number N. The starting position of each block is configured by higher-layer signaling, e.g., RRC. The information contained within each block is as follows: an SRS request (0 bit or 2 bits), and a TPC command (2 bits).

For each TPC command, as illustrated in Table 1, if it corresponds to an accumulated closed-loop power control adjustment state, the power control adjustment value each time is one of the set {- 1, 0, 1, 3}; and if it corresponds to an absolute (non-accumulated) closed-loop power control adjustment state, the adjustment value each time is one of the set {-4, -1, 1, 4}.

**Table 1: mapping of TPC command field in DCI format scheduling a PUSCH transmission, or in DCI format 2_2 with CRC scrambled by TPC-PUSCH-RNTI, or in DCI format 2_3, to absolute and accumulated δ_{PUSCH,b,f,c} values or δ_{SRS,b,f,c} values**

| TPC Command field | Accumulated *δ*_{PUSCH,*b,f,c*} or *δ*_{SRS,*b,f,c*} [dB] | Absolute *δ*_{PUSCH,*b,f,c*} or *δ*_{SRS,*b,f,c*} [dB] |
|---|---|---|
| 0 | -1 | -4 |
| 1 | 0 | -1 |
| 2 | 1 | 1 |
| 3 | 3 | 4 |

In the related art, as illustrated in FIG. 5, a schematic diagram illustrates a scenario of combined usage of an uplink TRP and a downlink TRP. As illustrated in FIG. 5, a UE needs to transmit an SRS to two TRPs respectively. That is, the UE needs to transmit the SRS to both the UL-only TRP (TRP only for uplink) 510 and the regular TRP 520. For any TRP, the NW configures at least one SRS resource set and RRC parameters corresponding to the SRS resource set, for performing uplink power control. However, from the perspective of the above-mentioned SRS power control formula, in a case where the closed-loop power control is performed for the SRS and the PUSCH separately, the SRS has only one closed-loop power control adjustment state set regardless of which SRS resource set the SRS belongs to. That is, in the case where the closed-loop power control of the SRS and the closed-loop power control of the PUSCH are different, due to there being only one closed-loop power control adjustment state set, the formula of the closed-loop power control adjustment state for the SRS lacks the variable *l*. Accordingly, in the DCI format 2_3, the TPC command for the SRS also lacks the indication of the closed-loop index (CLI).

Considering the power control problem in the scenario of multi-TRP, one closed-loop power control adjustment state set is insufficient. Based on the above consideration, the present disclosure proposes an SRS closed-loop power control method, which aims at enabling the terminal device to maintain at least two closed-loop power control adjustment state sets in the case where the power control of the SRS is independent of the power control of the uplink data channel. Therefore, for different nodes or devices having the uplink receiving functions, a suitable closed-loop power control adjustment state can be selected from the at least two closed-loop power control adjustment state sets to adjust the transmit power of the SRS, thereby enhancing the accuracy of power adjustment for the SRS.

Referring to FIG. 6, which illustrates a flowchart of an SRS closed-loop power control method provided in an embodiment of the present disclosure. The method may include the following operations.

In operation 610, in a case where power control of an SRS is independent of power control of an uplink data channel, a terminal device maintains at least two closed-loop power control adjustment state sets for the SRS.

In a case where the power control of the SRS is maintained to be consistent with the power control of the uplink data channel, power control is performed for the SRS according to the power control of the uplink data channel; and for details, please refer to the explanations in the above embodiments, which will not be repeated here. The embodiments of the present disclosure are proposed for the case where the power control of the SRS is independent of the power control of the uplink data channel. In the case where the power control of the SRS is independent of the power control of the uplink data channel, two closed-loop power control adjustment state sets are maintained for the SRS.

In some embodiments, the SRS is referred to as sounding reference signal. In wireless communications, the SRS is used to estimate frequency-domain information of an uplink channel, for frequency-selective scheduling, or to estimate a downlink channel for downlink beamforming.

In some embodiments, the uplink data channel is a channel that supports carrying data information. The uplink data channel may be a data channel, and the data channel may be a data channel for an uplink transmission that supports carrying uplink data information, and may be referred to as an uplink data channel. In some embodiments, the uplink data channel is a PUSCH that supports carrying uplink data information. Certainly, with the evolution of the communication technologies, the name of the uplink data channel may change, for example, instead of being referred to as the PUSCH, the uplink data channel may be referred to by other names, which are not limited in the present disclosure.

In some embodiments, closed-loop power control is a type of power control. The closed-loop power control, a power level of a transmitting end is dynamically adjusted according to the reception effect at a receiving end. The closed-loop power control is a control mode in which the power level of the transmitting end is dynamically adjusted according to the reception effect at the receiving end. When determining that the effect is poor, the receiving end may require the transmitting end to increase the power; and when determining that the effect is too good, the receiving end may require the transmitting end to decrease the power. The closed-loop power control is achieved jointly by the transmitting end and the receiving end. In some embodiments, the closed-loop power control process involves a feedback control loop, where the receiving end compares the received signal quality with the expected signal quality, and issues a command (e.g., a TPC command) for the transmitting end to increase or decrease the power. The transmitting end executes the command and repeats according to this rule. In other embodiments, the power control also includes open-loop power control. In the open-loop power control, the transmitting end autonomously determines the level of transmit power. That is, the transmit power of the transmitting end has nothing to do with the receiving end. In the embodiments of the present disclosure, the transmitting end may be implemented as a terminal device, and the receiving end may be implemented as a network device.

In some embodiments, the closed-loop power control adjustment state may be understood as a mode or means for closed-loop power control adjustment. In the related art, in the case where the power control of the SRS is independent of the power control of the uplink data channel, the closed-loop power control adjustment state for the SRS is unique, regardless of the number or type of receiving ends. Whereas in the embodiments of the present disclosure, in case of already knowing that the power control of the SRS is independent of the power control of the uplink data channel, at least two closed-loop power control adjustment state sets are maintained by the terminal device. Exemplarily, taking an example in which the terminal device maintains N closed-loop power control adjustment state sets (i.e., a closed-loop power control adjustment state 1, a closed-loop power control adjustment state 2, ..., and a closed-loop power control adjustment state N, N being a positive integer greater than or equal to 2), the terminal device performs a power control adjustment on the SRS by utilizing the closed-loop power control adjustment state 1, and transmits the SRS to a corresponding receiving end 1 (or a node 1 or device 1 having an uplink receiving function) according to the adjusted power. The terminal device performs a power control adjustment on the SRS by utilizing the closed-loop power control adjustment state 2, and transmits the SRS to a corresponding receiving end 2 (or a node 2 or device 2 having an uplink receiving function) according to the adjusted power. The terminal device performs a power control adjustment on the SRS by utilizing the closed-loop power control adjustment state N, and transmits the SRS to a corresponding receiving end N (or a node N or device N having an uplink receiving function) according to the adjusted power.

In still other embodiments, the terminal device saves at least two closed-loop power control adjustment state sets. That is, the at least two closed-loop power control adjustment state sets are saved in the terminal device, and depending on the requirements of a received downlink signal, the terminal device can select a corresponding closed-loop power control adjustment state.

In still other embodiments, the at least two closed-loop power control adjustment state sets may be pre-saved in a network device. Alternatively, when transmitting a downlink signal to the terminal device, the network device may simultaneously transmit the at least two closed-loop power control adjustment state sets to the terminal device, where the downlink signal is used for indicating the terminal device to perform power control on the SRS. In this case, the on-demand loading of the closed-loop power control adjustment states is achieved, thereby reducing the storage cost of the terminal device for the closed-loop power control adjustment states.

In some embodiments, each closed-loop power control adjustment state corresponds to a device or node having an uplink receiving function. In some embodiments, the device or node having the uplink receiving function may only include an uplink receiving function, e.g., the UL-only TRP (TRP only for uplink) in FIG. 5. In other embodiments, the device or node having the uplink receiving function may include not only an uplink receiving function but also a downlink transmitting function, e.g., the regular TRP in FIG. 5. Certainly, the specific name of the device or node having the uplink receiving function corresponding to each closed-loop power control adjustment state is not limited in the embodiments of the present disclosure. Any device or node having the uplink receiving function may serve as the device or node corresponding to the closed-loop power control adjustment state.

In some embodiments, the terminal device transmits first capability information to the network device, where the first capability information indicates whether the terminal device maintains the at least two closed-loop power control adjustment state sets for the SRS. In some embodiments, the terminal device transmits the first capability information via a first channel. The first channel is a channel that supports carrying data information. The first channel may be a data channel, and the data channel may be a data channel for uplink transmission that supports carrying the data information, and may also be referred to as an uplink data channel. In some embodiments, the first channel is a PUSCH, which supports carrying uplink data information.

In some embodiments, the first capability information is an information format used for indicating whether the terminal device maintains the at least two closed-loop power control adjustment state sets for the SRS. In some embodiments, after the terminal device transmits the first capability information to the network device, the network device may learn from the first capability information whether the terminal device maintains the at least two closed-loop power control adjustment state sets for the SRS.

In some embodiments, in the case where the terminal device maintains the at least two closed-loop power control adjustment state sets for the SRS, the first capability information is further used for indicating a respective maximum number of closed-loop power control adjustment states corresponding to each of N carriers, N being an integer greater than or equal to 1. Exemplarily, different carriers may correspond to different power control adjustment states or correspond to the same power control adjustment state. Exemplarily, the respective maximum number of closed-loop power control adjustment states corresponding to each of the N carriers is transmitted to the network device. In some embodiments, the terminal device reports, to the network device, a maximum number of closed-loop power control adjustment states supported within a serving cell.

In some embodiments, the terminal device achieves capability reporting by transmitting the first capability information to the network device. The first capability information is used for informing the network device whether the terminal device maintains (or supports) the at least two closed-loop power control adjustment state sets, that is, the first capability information indicates whether the terminal device has a capability to support the at least two closed-loop power control adjustment state sets. In still other embodiments, in case of indicating that the terminal device supports the at least two closed-loop power control adjustment state sets, the first capability information may further indicate the maximum number of closed-loop power control adjustment states supported by the terminal device. Through capability reporting, the terminal device informs the network device whether the terminal device supports the at least two closed-loop power control adjustment state sets. In a case where the terminal device supports the at least two closed-loop power control adjustment state sets, the terminal device simultaneously reports the maximum number of closed-loop power control adjustment states supported within the serving cell. The maximum number of closed-loop power control adjustment states supported may be included in the first capability information, or may be reported separately by the terminal device.

How to adjust a transmit power of an SRS according to a closed-loop power control adjustment state is described exemplarily below.

In some embodiments, the terminal device receives first control information transmitted by the network device, where the first control information is used for adjusting the transmit power of the SRS.

In the embodiments of the present disclosure, the network device transmits the first control information to the terminal device, to indicate the terminal device to perform adjustment on the transmit power of the SRS. Exemplarily, the network device transmits the first control information to the terminal device via a downlink channel, where the downlink channel is a channel having a downlink data transmitting function. Exemplarily, the first control information is an information format for the terminal device to perform adjustment on the transmit power of the SRS.

In some embodiments, the terminal device determines a transmit power of an SRS corresponding to at least one closed-loop power control adjustment state set among the at least two closed-loop power control adjustment state sets according to the first control information.

In some embodiments, the first control information indicates identification information of a target closed-loop power control adjustment state, where the target closed-loop power control adjustment state is a closed-loop power control adjustment state in the at least two closed-loop power control adjustment state sets. Exemplarily, the transmit power of the SRS is adjusted based on the target closed-loop power control adjustment state.

In the embodiments of the present disclosure, the network device transmits the first control information to the terminal device, and furthermore, the terminal device determines at least one closed-loop power control adjustment state set among the at least two closed-loop power control adjustment state sets according to the first control information. This helps in improving the accuracy of the closed-loop power control adjustment state used for adjusting the power of the SRS. That is, the closed-loop power control adjustment state is not selected randomly but is selected according to the indication from the network device, which helps to ensure the effect of the power adjustment.

Certainly, how to specifically determine the transmit power of the SRS corresponding to the at least one closed-loop power control adjustment state set among the at least two closed-loop power control adjustment state sets according to the first control information includes at least one of approach 1 and approach 2 as follows.

In approach 1: for an i-th carrier, a transmit power of an SRS corresponding to the i-th carrier is determined according to a TPC command corresponding to the i-th carrier and a closed-loop power control adjustment state corresponding to the i-th carrier.

In this case, the first control information includes a respective TPC command and a respective piece of first index indication information corresponding to each of N carriers, where first index indication information corresponding to the i-th carrier among the N carriers is used for indicating an index of the closed-loop power control adjustment state corresponding to the i-th carrier, N being an integer greater than or equal to 1, and i being a positive integer less than or equal to N.

In some embodiments, the first control information transmitted by the network device to the terminal device includes TPC commands respectively corresponding to the N carriers, and pieces of first index indication information respectively corresponding to the N carriers.

In some embodiments, the TPC command is a command transmitted by the network device for indicating the terminal device to perform transmit power control. In some embodiments, the terminal device transmits data to the network device via M carriers, M being a positive integer greater than or equal to N, and different carriers corresponding to different transmit powers. In some embodiments, the network device transmits the first control information to the terminal device, where the first control information includes the TPC commands respectively corresponding to the N carries among the M carriers, and the pieces of first index indication information respectively corresponding to the N carries among the M carriers.

In some embodiments, the first index indication information corresponding to the i-th carrier among the N carriers is used for indicating the index of the closed-loop power control adjustment state corresponding to the i-th carrier. The specific form of the first index indication information is not limited in the embodiments of the present disclosure. The form of the first index indication information may be at least one of: a number or a vector, etc. In some embodiments, the first index indication information may be represented by N bits, N being a positive integer, which may indicate up to 2^{N} different closed-loop power control adjustment states. For example, when N is equal to 1, the first index indication information may indicate up to 2 different closed-loop power control adjustment states. For example, when N is equal to 2, the first index indication information may indicate up to 4 different closed-loop power control adjustment states.

In some embodiments, the first index indication information is a closed-loop index (CLI). In some embodiments, in a case where the terminal device maintains the two closed-loop power control adjustment state sets, the two closed-loop power control adjustment state sets respectively correspond to indices *l* = {0, 1}. 0 indicates the first closed-loop power control adjustment state set, and 1 indicates the second closed-loop power control adjustment state set.

In some embodiments, the formula for the transmit power of the SRS is as follows: $\begin{matrix}{P}_{SRS , b , f , c} \left(i, {q}_{s}, l\right) = \\ min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\} ;\end{matrix}$ where the closed-loop part *h_{b,f,c}*(*i, l*) includes an index *l* of CLI. In the related art, in case of already knowing that the power control of the SRS is independent of the power control of the uplink data channel, the index *l* does not exist because only one closed-loop power control adjustment state exists, and reference may be made on the above embodiments, which will not be repeated here. In the embodiments of the present disclosure, even when the power control of the SRS is independent of the power control of the uplink data channel, multiple closed-loop power control adjustment state sets exist, and thus the index *l* is required.

Specifically, ${h}_{b , f , c} \left(i, l\right) = {h}_{b , f , c} \left(i-{i}_{0},l\right) + {\sum }_{m = 0}^{C \left({S}_{i}\right) - 1} {δ}_{SRS , b , f , c} \left(m, l\right)$;
where *h_{b,f,c}*(*i - i*₀, *l*) is the closed-loop power control accumulated value of an index *l* of a closed-loop power control adjustment state on an occasion (*i - i*₀); and *δ*_{SRS*,b,f,c*}(*m, l*) is a TPC command for the index *l* of the closed-loop power control adjustment state indicated, via DCI format 2_3, by the NW for the SRS.

In some embodiments, the first control information is DCI format 2_3. By introducing the first index indication information (i.e., CLI) into the DCI format 2_3, it is indicated for which index of the closed-loop power control adjustment state the transmit power control is effective.

In some embodiments, in a case where the RRC parameter srs-TPC-PDCCH-Group = typeA, for power control of multiple uplink carriers, one DCI format 2_3 may contain N TPC commands and N corresponding CLI indications, where the CLIs have a one-to-one correspondence with the TPC commands.

In some embodiments, if the UE is configured with the higher layer parameter srs-TPC-PDCCH-Group = typeA for an UL without PUCCH and PUSCH or an UL on which the SRS power control is not tied with PUSCH power control, one block is configured for the UE by higher layers, with the following fields defined for the block.

In some embodiments, an SRS request is 0 bit or 2 bits. The presence of the field is according to the definition in clause 11.4 of [5, TS38.213]. If present, the field is interpreted as defined by Table 7.3.1.1.2-24.

In some embodiments, for TPC command number 1, TPC command number 2, ..., and TPC command number N, each TPC command applies to a respective UL carrier provided by higher layer parameter cc-IndexInOneCC-Set.

In some embodiments, for a closed loop indicator 1 (first index indication information), a closed loop indicator 2, ..., and a closed loop indicator N, each CLI (closed-loop index) corresponds to each TPC command applied to a respective UL carrier.

In some embodiments, it is 0 bit if the UE is configured with the higher layer parameter srs-PowerControlAdjustmentStates to apply the same closed-loop power control as PUSCH. Otherwise, n bits with each bit to indicate whether the index is 0 or 1.

In some embodiments, in a case where the RRC parameter srs-TPC-PDCCH-Group = typeB, for power control of one uplink carrier, there is only one TPC command and one corresponding CLI indicator in one DCI format 2_3.

That is, the first control information may include only the TPC command corresponding to one carrier and the first index indication information corresponding to the carrier, or the first control information may include TPC commands respectively corresponding to multiple carriers, and pieces of first index indication information respectively corresponding to the multiple carriers.

In the embodiments of the present disclosure, the network device transmits the first control information to the terminal device to inform the terminal device of an index of the closed-loop power control adjustment state for the uplink channel or signal corresponding to each of different carriers. The terminal device obtains a corresponding closed-loop power control adjustment state based on first index indication information corresponding to different carrier, and adjusts the transmit power of the uplink channel or signal corresponding to the carrier by utilizing the closed-loop power control adjustment state, thereby improving the accuracy of adjustment in the transmit power of the uplink channel or signal.

In approach 2: for the i-th carrier, the closed-loop power control adjustment state corresponding to the i-th carrier is determined according to an indicated TCI state corresponding to the i-th carrier and a correspondence relationship between the indicated TCI state and the closed-loop power control adjustment state; and a transmit power of an uplink channel corresponding to the i-th carrier or an uplink signal corresponding to the i-th carrier is determined according to a TPC command corresponding to the i-th carrier and the closed-loop power control adjustment state corresponding to the i-th carrier, where the uplink channel or the uplink signal includes an SRS.

In this case, the first control information includes a respective TPC command and a respective piece of second index indication information corresponding to each of N carriers, where second index indication information corresponding to the i-th carrier among the N carriers is used for indicating an index of the indicated TCI state corresponding to the i-th carrier, and there is a correspondence relationship between the indicated TCI state and the closed-loop power control adjustment state, N being an integer greater than or equal to 1, and i being a positive integer less than or equal to N.

In some embodiments, the first control information transmitted by the network device to the terminal device includes TPC commands respectively corresponding to N carriers, and pieces of second index indication information respectively corresponding to the N carriers.

In some embodiments, the TPC command is a command transmitted by the network device for indicating the terminal device to perform transmit power control. In some embodiments, the terminal device transmits data to the network device via M carriers, M being a positive integer greater than or equal to N, and different carriers corresponding to different transmit powers. In some embodiments, the network device transmits the first control information to the terminal device, where the first control information includes the TPC commands respectively corresponding to the N carries among the M carriers, and the pieces of second index indication information respectively corresponding to the N carries among the M carriers.

In some embodiments, the second index indication information corresponding to the i-th carrier among the N carriers is used for indicating the index of the indicated TCI state corresponding to the i-th carrier. The specific form of the second index indication information is not limited in the embodiments of the present disclosure. The form of the second index indication information may be a number or other forms. In some embodiments, the second index information corresponding to the i-th carrier is an information format for indicating the index of the indicated TCI state corresponding to the i-th carrier. In some embodiments, the second index indication information may be represented by N bits, N being a positive integer, which may indicate up to 2^{N} different TCI states. For example, when N is equal to 1, the second index indication information may indicate up to 2 different TCI states. For example, when N is equal to 2, the second index indication information may indicate up to 4 different TCI states.

In some embodiments, a correspondence relationship exists between a TCI state and a closed-loop power control adjustment state. Exemplarily, for a possible TCI state, the correspondence relationship between the TCI state and the closed-loop power control adjustment state is preset by a terminal device, transmitted by a network device, or specified by a protocol. The possible TCI state may include all TCI states or common TCI states. The specific categories of TCI states having corresponding closed-loop power control adjustment states are not limited in the present disclosure.

In still other embodiments, a correspondence relationship exists between an indicated TCI state and a closed-loop power control adjustment state. Exemplarily, for an indicated TCI state, the correspondence relationship between the indicated TCI state and the closed-loop power control adjustment state is preset by a terminal device, transmitted by a network device, or specified by a communication protocol.

Exemplarily, presetting the correspondence relationship by the terminal device is described as follows. In some embodiments, the terminal device pre-stores the correspondence relationship between the TCI state and the closed-loop power control adjustment state. In still other embodiments, the terminal device pre-stores the correspondence relationship between a TCI state that can be indicated by the second index indication information and a closed-loop power control adjustment state. In this case, the network device only needs to indicate the index of the TCI state via the first control information, without needing a specific index of the closed-loop power control adjustment state. That is, in a case where power control is required for both a target channel and an SRS, in approach 1, for the SRS, the network device needs to separately transmit the index of the closed-loop power control adjustment state (i.e., the first index indication information) to the terminal device, and for the target channel, the network device needs to transmit the index of the indicated TCI state (i.e., the second index indication information) to the terminal device. Therefore, the network device needs to transmit signaling at least twice to achieve simultaneous power adjustment for both the target signal and the SRS. Whereas in approach 2 of the present disclosure, in the case where power control is also performed for the SRS, for both the SRS and the target channel, the network device transmits the index of the indicated TCI state to the terminal device. That is, the task of power adjustment for both the target signal and the SRS, which originally required two signaling, is merged into a task that can be completed with single signaling, thereby reducing the signaling overhead. Here, the target channel refers to an uplink control channel and/or an uplink data channel.

Exemplarily, transmitting the correspondence relationship by the network device to the terminal device is described as follows. In some embodiments, the network device always stores the correspondence relationship between a TCI state and a closed-loop power control adjustment state. When transmitting the first control information to the terminal device for the first time, the network device transmits the correspondence relationship between the TCI state and the closed-loop power control adjustment state; and when transmitting the first control information again, the network device does not need to retransmit the correspondence relationship between the TCI state and the closed-loop power control adjustment state, thereby achieving the on-demand loading of the correspondence relationship and also reducing the signaling overhead. In still other embodiments, the network device always stores the correspondence relationship between an indicated TCI state and a closed-loop power control adjustment state. When transmitting the first control information to the terminal device for the first time, the network device transmits the correspondence relationship between the indicated TCI state and the closed-loop power control adjustment state. When transmitting the first control information again, if the indicated TCI state does not change, the network device does not need to retransmit the correspondence relationship between the indicated TCI state and the closed-loop power control adjustment state; and if the indicated TCI state changes, the network device retransmits the correspondence relationship between the indicated TCI state and the closed-loop power control adjustment state. This achieves the on-demand loading of the correspondence relationship and also reduces the signaling overhead.

Exemplarily, specifying the correspondence relationship by the communication protocol is described. In some embodiments, the communication protocol specifies the correspondence relationship between a TCI state and a closed-loop power control adjustment state. For example, the communication protocol specifies the correspondence relationship between all possible TCI states and closed-loop power control adjustment states. Alternatively, the communication protocol specifies the correspondence relationship between at least two closed-loop power control adjustment state sets supported by the terminal device and TCI states, or the communication protocol specifies the correspondence relationship between TCI states that can be indicated by the second index indication information and closed-loop power control adjustment states. For the manner in which the communication protocol specifies the correspondence relationship, there is no need to transmit additional signaling to indicate the correspondence relationship, thereby reducing the signaling transmission overhead.

In some embodiments, the first control information is DCI format 2_2. By introducing the second index indication information into the DCI format 2_2 to indicate a DCI state, the corresponding closed-loop power control adjustment state is further searched through the correspondence relationship.

In some embodiments, the uplink channel or the uplink signal further includes at least one of an uplink control channel or an uplink data channel. In some embodiments, the uplink control channel is a channel that supports carrying control information, and may be referred to as an uplink control channel. In some embodiments, the uplink control channel is a PUCCH that supports carrying uplink control information. Certainly, with the evolution of the communication technologies, the name of the uplink control channel may change, for example, instead of being referred to as the PUSCH, the uplink data channel may be referred to by other names, which are not limited in the present disclosure.

In some embodiments, in addition to the SRS, power control may also be performed for other uplink channels or signals other than the SRS, for example, performing power control for an uplink control channel and/or an uplink data channel. Exemplarily, power control adjustment is performed for a PUSCH or a PUCCH.

In some embodiments, a TCI state is an uplink TCI state or a joint TCI state. The second index indication information may be used for indexing the uplink TCI state or the joint TCI state, which is not limited in the present disclosure.

In some embodiments, a closed-loop power control TPC indication for the PUCCH or the PUSCH in DCI format 2_2 may be combined with a closed-loop power control TPC indication for the SRS in DCI format 2_3 into single DCI signaling. In the embodiments, the closed-loop power control is performed using the indicated uplink/joint TCI state. The uplink/joint TCI state indicated by the second index indication information is applicable not only to an SRS (on a per SRS resource set basis), but also to an uplink PUCCH and PUSCH, which is attributed to the characteristic of the unified TCI state. This can reduce the signaling overhead of DCI for closed-loop power control.

For the power calculation formula of the SRS , the closed-loop power control part needs a slight adjustment, that is, replacing the indicated closed-loop power control index (CLI) with the index *k =* {0, 1} of the indicated TCI state (the second index indication information), where 0 represents an uplink TCI state and 1 represents a joint TCI state. Certainly, considering the forward compatibility of the example, a maximum of K (K > 2) indicated uplink/joint TCI states may be considered, i.e., *k* = {0, 1, ... *K*}. ${h}_{b , f , c} \left(i, k\right) = {h}_{b , f , c} \left(i-{i}_{0},k\right) + {\sum }_{m = 0}^{C \left({S}_{i}\right) - 1} {δ}_{SRS , b , f , c} \left(m, k\right)$.

In some embodiments, if a UE is configured with the higher layer parameter srs-TPC-PDCCH-Group *= typeA* for an UL without PUCCH and PUSCH or a UL on which the SRS power control is not tied with PUSCH power control, one block is configured for the UE by higher layers, with the following fields defined for the block.

In some embodiments, an SRS request is 0 bit or 2 bits.

In some embodiments, for TPC command number 1, TPC command number 2, ..., and TPC command number N, each TPC command applies to a respective UL carrier provided by the higher layer parameter *cc-IndexInOneCC-Set.*

In some embodiments, for an UL/joint TCI state indicator (i.e., second index indication information) 1, an UL/joint TCI state indicator 2, ..., and an UL/joint TCI state indicator N, each UL/joint TCI state indicator corresponds to each TPC command applied to a respective UL carrier.

In some embodiments, for N bits, each bit in UL/joint TCI state indicator signals that a TPC command should be associated with either the first indicated UL/joint TCI state or the second indicated UL/joint TCI state.

In some embodiments, if the UE is configured with the higher layer parameter srs-TPC-PDCCH-Group = typeB for a UL without PUCCH and PUSCH or a UL on which the SRS power control is not tied with PUSCH power control, one or more blocks are configured for the UE by higher layers, where each block applies to a UL carrier, with the following fields defined for each block.

In some embodiments, the SRS request is 0 bit or 2 bits.

In some embodiments, the TPC command is 2 bits.

In some embodiments, the UL/joint TCI state indicator indicates that the TPC command should be associated with either the first indicated UL/joint TCI state or the second indicated UL/joint TCI state.

In some embodiments, the UL/joint TCI state indicator is 1 bit.

In some embodiments, each uplink/joint TCI state may include a CLI, which points to the closed-loop power control adjustment state index *l* = {0, 1}. After receiving the DCI format 2_3, the UE may determine with which indicated uplink/joint TCI state the TPC is associated, and thus, when using the uplink/joint TCI state for uplink transmission of a PUCCH/PUSCH/SRS, the UE adjusts the power using the corresponding TPC command. The benefit of this approach is that, in addition to being applicable to the SRS, the TPC can also function for other uplink channels, e.g., the PUCCH/PUSCH, thereby saving the additional signaling overhead.

The combination of the approach 1 and the approach 2 is exemplarily described below.

In some embodiments, the first control information includes a respective transmit power control (TPC) command and a respective piece of first index indication information corresponding to each of M carriers, where first index indication information corresponding to an m-th carrier among the M carriers is used for indicating an index of a closed-loop power control adjustment state corresponding to the m-th carrier, M being an integer greater than or equal to 1, and m being a positive integer less than or equal to M. In still other embodiments, the first control information further includes a respective TPC command and a respective piece of second index indication information corresponding to each of N carriers, where second index indication information corresponding to an i-th carrier among the N carriers is used for indicating an index of an indicated TCI state corresponding to the i-th carrier, and a correspondence relationship exists between the indicated TCI state and the closed-loop power control adjustment state, N being an integer greater than or equal to 1, and i being a positive integer less than or equal to N. There is no overlap between the M carriers and the N carriers.

Exemplarily, for the m-th carrier among the M carriers, a transmit power of an SRS corresponding to the m-th carrier is determined based on a TPC command corresponding to the m-th carrier and the closed-loop power control adjustment state corresponding to the m-th carrier.

Exemplarily, for the i-th carrier among the N carriers, a closed-loop power control adjustment state corresponding to the i-th carrier is determined based on the indicated TCI state corresponding to the i-th carrier and the correspondence relationship between the indicated TCI state and the closed-loop power control adjustment state; and the transmit power of an uplink channel corresponding to the i-th carrier or an uplink signal corresponding to the i-th carrier is determined based on a TPC command corresponding to the i-th carrier and the closed-loop power control adjustment state corresponding to the i-th carrier.

That is, for transmit powers of uplink channels or signals corresponding to the N carriers, the transmit power of a part of uplink channels or signals is determined according to the approach 1, and the transmit power of the other part is determined according to the approach 2. For a receiving end that is a regular TRP, that is, for a node or device having both uplink and downlink transmission, the closed-loop power control adjustment states corresponding to different carriers are determined via the approach 1, so that the transmit power of the SRS is further obtained. For a receiving end that is an uplink TRP, that is, for a node or device having uplink transmission, the closed-loop power control adjustment states corresponding to different carriers are determined via the approach 2, so that the transmit powers of different channels are obtained.

First, for the uplink TRP, the NW configures an SRS resource set A to follow the closed-loop power control of a PUSCH, and only when *l* is equal to a specific index (0 or 1), i.e., *l*= 0 or 1 corresponding to the uplink TRP, does the SRS use the same closed-loop power control TPC command as the PUSCH. The transmit power control (TPC) command is transmitted by the NW to the UE via the DCI format 2_2. The configuration type of the SRS resource set is an uplink PUSCH transmission based on "codebook" or an uplink PUSCH transmission base on "non-codebook".

Second, for a regular uplink-downlink TRP, generally, the NW does not configure or schedule the UE to transmit a PUCCH or a PUSCH towards the TRP. Therefore, the SRS of SRS resource set B cannot be transmitted using the specific closed-loop power control TPC command that is the same as the closed-loop power control TPC command of the PUSCH and that points to the TRP. The configuration type of the SRS resource set may be based on "antenna switching" or "beam management".

In a case where the UE transmits the SRS resource set B to the uplink-downlink TRP, the UE uses the TPC command in the DCI format 2_3. The TPC command is not applicable to an SRS of the SRS resource set A.

By configuring (through RRC) the closed-loop power control TPC for indicating the PUSCH (DCI format 2_2) and for indicating the SRS (DCI format 2_3) according to the above scheme, the UE can achieve independent closed-loop power control adjustment states for different TRPs.

An exemplary description of how to determine whether the power control of the SRS is independent of the power control of the uplink data channel is provided below.

In some embodiments, the terminal device receives first configuration information transmitted by the network device, where the first configuration information is used for configuring whether the power control of the SRS is independent of the power control of the uplink data channel.

In some embodiments, the network device transmits the first configuration information to the terminal device via a downlink channel, where the first configuration information is used for configuring whether the power control of the SRS is independent of the power control of the uplink data channel.

In some embodiments, in a case where the first configuration information is used for configuring the power control of the SRS to be independent of the power control of the uplink data channel, the transmit power of the SRS is determined based on the first control information, where the first control information is used for adjusting the transmit power of the SRS.

In some embodiments, in a case where the first configuration information is used for configuring the power control of SRS to follow the power control of the uplink data channel, the transmit power of the uplink data channel is determined based on second control information, and the transmit power of the SRS is the same as the transmit power of the uplink data channel, where the second control information is used for adjusting the transmit power of the uplink data channel.

In some embodiments, the second control information is used for adjusting the transmit power of the uplink data channel. Reference may be made to the explanation in the above embodiments, and details are not repeated here.

In some embodiments, in the case where the power control of the SRS is independent of the power control of the uplink data channel, the transmit power of the SRS is adjusted according to the first control information. In the case where the power control of the SRS follows the power control of the uplink data channel, the transmit power of the uplink data channel is determined based on the second control information, and the transmit power of the SRS is the same as the transmit power of the uplink data channel.

In the technical solution provided in the embodiments of the present disclosure, in the case where the power control of the SRS is independent of the power control of the uplink data channel, through the terminal device maintaining at least two closed-loop power control adjustment state sets for the SRS, the terminal device can perform power control on the SRS using different closed-loop power control adjustment states. For example, for different nodes or devices having the uplink receiving functions, a suitable closed-loop power control adjustment state can be selected from the at least two closed-loop power control adjustment state sets to adjust the transmit power of the SRS, thereby improving the accuracy of power control.

Please refer to FIG. 7, which illustrates a flowchart of an SRS closed-loop power control method provided in another embodiment of the present disclosure. The method may be performed by a network device. The method may include the following operations.

In operation 710: in a case where power control of an SRS is independent of power control of an uplink data channel, the network device transmits first control information to a terminal device, the first control information being used for adjusting a transmit power of the SRS, where the first control information is used for determining a transmit power of an SRS corresponding to at least one closed-loop power control adjustment state set among at least two closed-loop power control adjustment state sets maintained by the terminal device.

In some embodiments, first capability information transmitted by the terminal device is received, where the first capability information is used for indicating whether the terminal device maintains the at least two closed-loop power control adjustment state sets for the SRS.

In some embodiments, in a case where the terminal device maintains the at least two closed-loop power control adjustment state sets for the SRS, the first capability information is further used for indicating a respective maximum number of closed-loop power control adjustment states corresponding to each of N carriers, N being an integer greater than or equal to 1.

In some embodiments, the first control information includes a respective transmit power control (TPC) command and a respective piece of first index indication information corresponding to each of N carriers, where first index indication information corresponding to an i-th carrier among the N carriers is used for indicating an index of a closed-loop power control adjustment state corresponding to the i-th carrier, N being an integer greater than or equal to 1, and i being a positive integer less than or equal to N.

In some embodiments, the first control information includes a respective TPC command and a respective piece of second index indication information corresponding to each of N carriers, where second index indication information corresponding to an i-th carrier among the N carriers is used for indicating an index of a TCI state corresponding to the i-th carrier, and an indicated TCI state has a correspondence relationship with a closed-loop power control adjustment state, N being an integer greater than or equal to 1, and i being a positive integer less than or equal to N.

In some embodiments, an uplink channel or an uplink signal further includes at least one of an uplink control channel or an uplink data channel.

In some embodiments, the TCI state is an uplink TCI state or a joint TCI state.

In some embodiments, the method further includes: transmitting first configuration information to the terminal device, where the first configuration information is used for configuring whether the power control of the SRS is independent of the power control of the uplink data channel.

In some embodiments, the method further includes: in a case where the first configuration information is used for configuring the power control of the SRS to be independent of the power control of the uplink data channel, performing an operation of transmitting the first control information to the terminal device; or in a case where the first configuration information is used for configuring the power control of the SRS to follow the power control of the uplink data channel, transmitting second control information to the terminal device, where the second control information is used for adjusting a transmit power of the uplink data channel, and the transmit power of the SRS is the same as the transmit power of the uplink data channel.

In some embodiments, each closed-loop power control adjustment state set among the at least two closed-loop power control adjustment state sets corresponds to a device having an uplink receiving function or a node having an uplink receiving function.

For details not elaborated in the method embodiments on the network device side, please refer to the method embodiments on the terminal device side.

In the technical solutions provided in the embodiments of the present disclosure, in the case where the power control of SRS is independent of the power control of the uplink data channel, through the terminal device maintaining the at least two closed-loop power control adjustment state sets for the SRS, it is achieved that for multiple nodes or devices having the uplink receiving functions, the terminal device can perform power control on the SRS using different closed-loop power control adjustment states. For example, for different nodes or devices, a suitable closed-loop power control adjustment state can be selected from the at least two closed-loop power control adjustment state sets to adjust the transmit power of the SRS, thereby improving the accuracy of power control.

The apparatus embodiments of the present disclosure are as follows, which can be used to perform the method embodiments of the present disclosure. For details not disclosed in the apparatus embodiments of the present disclosure, please refer to the method embodiments of the present disclosure.

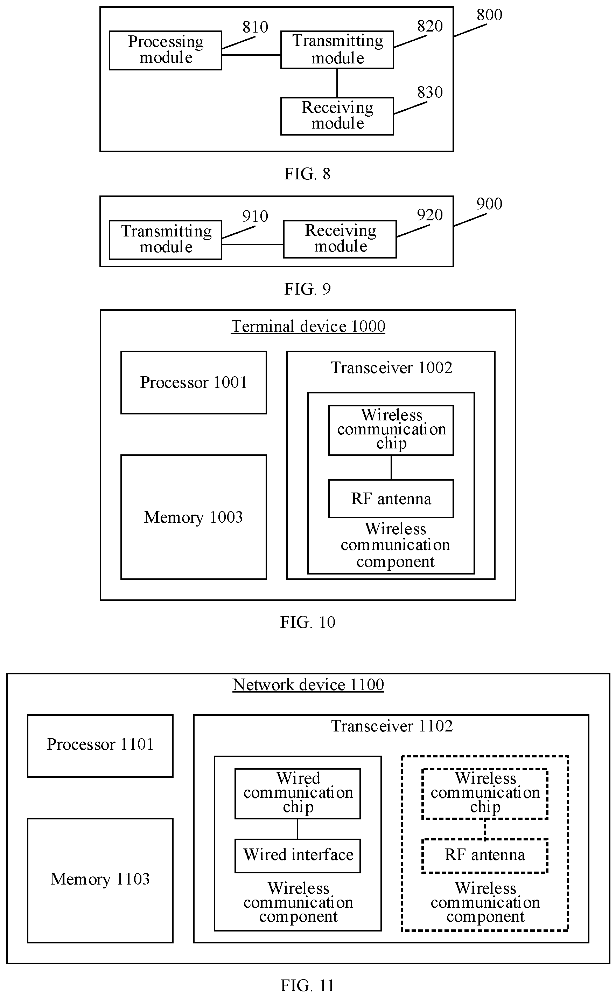

Please refer to FIG. 8, which illustrates a block diagram of an SRS closed-loop power control apparatus provided in an embodiment of the present disclosure. The apparatus has the function of implementing the above method examples on the terminal device side, where the function may be implemented by hardware, or by hardware executing corresponding software. The apparatus may be the terminal device introduced above, or may be arranged in the terminal device. As illustrated in FIG. 8, the apparatus 800 may include: a processing module 810.

The processing module 810 is configured to: in a case where power control of an SRS is independent of power control of an uplink data channel, maintain at least two closed-loop power control adjustment state sets for the SRS.

In some embodiments, as illustrated in FIG. 8, the apparatus further includes a transmitting nodule 820.

The transmitting nodule 20 is configured to transmit first capability information, where the first capability information is used for indicating whether the terminal device maintains the at least two closed-loop power control adjustment state sets for the SRS.

In some embodiments, in a case where the terminal device maintains the at least two closed-loop power control adjustment state sets for the SRS, the first capability information is further used for indicating a respective maximum number of closed-loop power control adjustment states corresponding to each of N carriers, N being an integer greater than or equal to 1.

In some embodiments, as illustrated in FIG. 8, the apparatus further includes a receiving nodule 830.

The receiving nodule 830 is configured to receive first control information, where the first control information is used for adjusting a transmit power of the SRS.

The processing module 810 is further configured to determine a transmit power of an SRS corresponding to at least one closed-loop power control adjustment state set among the at least two closed-loop power control adjustment state sets according to the first control information.

In some embodiments, the first control information includes a respective transmit power control (TPC) command and a respective piece of first index indication information corresponding to each of N carriers, where first index indication information corresponding to an i-th carrier among the N carriers is used for indicating an index of a closed-loop power control adjustment state corresponding to the i-th carrier, N being an integer greater than or equal to 1, and i being a positive integer less than or equal to N.

In some embodiments, the processing module 810 is configured to: for the i-th carrier, determine a transmit power of an SRS corresponding to the i-th carrier according to a TPC command corresponding to the i-th carrier and the closed-loop power control adjustment state corresponding to the i-th carrier.

In some embodiments, the first control information includes a respective TPC command and a respective piece of second index indication information corresponding to each of N carriers, where second index indication information corresponding to an i-th carrier among the N carriers is used for indicating an index of a TCI state corresponding to the i-th carrier, and an indicated TCI state has a correspondence relationship with a closed-loop power control adjustment state, N being an integer greater than or equal to 1, and i being a positive integer less than or equal to N.

In some embodiments, the processing module 810 is configured to: for the i-th carrier, determine a closed-loop power control adjustment state corresponding to the i-th carrier according to the indicated TCI state corresponding to the i-th carrier and the correspondence relationship between the indicated TCI state and the closed-loop power control adjustment state; and determine a transmit power of an uplink channel corresponding to the i-th carrier or an uplink signal corresponding to the i-th carrier according to a TPC command corresponding to the i-th carrier and the closed-loop power control adjustment state corresponding to the i-th carrier, where the uplink channel or the uplink signal includes the SRS.

In some embodiments, the uplink channel or the uplink signal further includes at least one of an uplink control channel or an uplink data channel.

In some embodiments, the TCI state is an uplink TCI state or a joint TCI state.

In some embodiments, the receiving module 830 is further configured to receive first configuration information, where the first configuration information is used for configuring whether the power control of the SRS is independent of the power control of the uplink data channel.

In some embodiments, the processing module 810 is configured to: in a case where the first configuration information is used for configuring the power control of the SRS to be independent of the power control of the uplink data channel, determine a transmit power of the SRS based on first control information, where the first control information is used for adjusting the transmit power of the SRS; or in a case where the first configuration information is used for configuring the power control of the SRS to follow the power control of the uplink data channel, determine a transmit power of the uplink data channel based on second control information, where the transmit power of the SRS is the same as the transmit power of the uplink data channel, and the second control information is used for adjusting the transmit power of the uplink data channel.

In some embodiments, each closed-loop power control adjustment state set among the at least two closed-loop power control adjustment state sets corresponds to a device having an uplink receiving function or a node with having uplink receiving function.

Please refer to FIG. 9, which illustrates a block diagram of an SRS closed-loop power control apparatus provided in another embodiment of the present disclosure. The apparatus has the function of implementing the method example on the network device side, where the function may be implemented by hardware, or by hardware executing corresponding software. The apparatus may be the network device introduced above, or may be arranged in the network device. As illustrated in FIG. 9, the apparatus 900 may include a transmitting module 910.

The transmitting module 910 is configured to: in a case where power control of an SRS is independent of power control of an uplink data channel, transmit first control information to a terminal device, the first control information being used for adjusting a transmit power of the SRS, where the first control information is used for determining a transmit power of an SRS corresponding to at least one closed-loop power control adjustment state set among at least two closed-loop power control adjustment state sets maintained by the terminal device.

In some embodiments, as illustrated in FIG. 9, the apparatus further includes a receiving module 920.

In some embodiments, the receiving module 920 is configured to receive first capability information transmitted by the terminal device, where the first capability information is used for indicating whether the terminal device maintains the at least two closed-loop power control adjustment state sets for the SRS.

In some embodiments, in a case where the terminal device maintains the at least two closed-loop power control adjustment state sets for the SRS, the first capability information is further used for indicating a respective maximum number of closed-loop power control adjustment states corresponding to each of N carriers, N being an integer greater than or equal to 1.

In some embodiments, the first control information includes a respective transmit power control (TPC) command and a respective piece of first index indication information corresponding to each of N carriers, where first index indication information corresponding to an i-th carrier among the N carriers is used for indicating an index of a closed-loop power control adjustment state corresponding to the i-th carrier, N being an integer greater than or equal to 1, and i being a positive integer less than or equal to N.

In some embodiments, the first control information includes a respective TPC command and a respective piece of second index indication information corresponding to each of N carriers, where second index indication information corresponding to an i-th carrier among the N carriers is used for indicating an index of a TCI state corresponding to the i-th carrier, and an indicated TCI state has a correspondence relationship with a closed-loop power control adjustment state, N being an integer greater than or equal to 1, and i being a positive integer less than or equal to N.

In some embodiments, an uplink channel or an uplink signal further includes at least one of an uplink control channel or an uplink data channel.

In some embodiments, the TCI state is an uplink TCI state or a joint TCI state.

In some embodiments, the transmitting module 910 is configured to transmit first configuration information to the terminal device, where the first configuration information is used for configuring whether the power control of the SRS is independent of the power control of the uplink data channel.

In some embodiments, the transmitting module 910 is configured to: in a case where the first configuration information is used for configuring the power control of the SRS to be independent of the power control of the uplink data channel, perform an operation of transmitting the first control information to the terminal device; or in a case where the first configuration information is used for configuring the power control of the SRS to follow the power control of the uplink data channel, transmit second control information to the terminal device, where the second control information is used for adjusting a transmit power of the uplink data channel, and the transmit power of the SRS is the same as the transmit power of the uplink data channel.

In some embodiments, each closed-loop power control adjustment state set among the at least two closed-loop power control adjustment state sets corresponds to a device having an uplink receiving function or a node having an uplink receiving function.

It should be noted that, when the above apparatus provided in the embodiments implementing its function, the division into the various functional modules is described only as an example. In practical applications, the above functions may be allocated to and completed by different functional modules according to actual needs. That is, the internal structure of the device may be divided into different functional modules to complete all or part of the above functions.

Regarding the above apparatus in the embodiments, the specific manner in which each module performs operations has been described in detail in the method embodiments, which will not be elaborated upon here.

Please refer to FIG. 10, which illustrates a schematic structural diagram of a terminal device 1000 provided in an embodiment of the present disclosure. The terminal device 1000 can be used to perform the method operations performed by the terminal device in the above embodiments. The terminal device 1000 may include a processor 1001, a transceiver 1002, and a memory 1003. The transceiver 1002 is configured to implement a transmitting function or a receiving function, for example, implement the functions of the above-mentioned transmitting module 820 and/or receiving module 830. The processor 1001 can be configured to implement other processing functions or for controlling a transmission and/or reception, for example, implement the function of the above-mentioned processing module 810.

The processor 1001 includes one or more processing cores, and the processor 1001 executes various functional applications and information processing by running software programs and modules.

The transceiver 1002 may include a receiver and a transmitter. For example, the receiver and the transmitter may be implemented as the same wireless communication component, which may include a wireless communication chip and a radio frequency antenna.

The memory 1003 may be connected to the processor 1001 and the transceiver 1002.

The memory 1003 can be configured to store computer programs executed by the processor, and the processor 1001 is configured to execute the computer programs to implement various operations performed by the terminal device in the above method embodiments.

In addition, the memory 1003 may be implemented by any type of volatile or non-volatile storage device or a combination thereof, where the volatile or non-volatile storage device includes but not limited to: a magnetic disk or an optical disc, an electrically erasable programmable read-only memory, an erasable programmable read-only memory, a static random-access memory, a read-only memory, a magnetic memory, a flash memory, and a programmable read-only memory.

In some embodiments, the transceiver 1002 is configured to: in a case where power control of an SRS is independent of power control of an uplink data channel, maintain at least two closed-loop power control adjustment state sets for the SRS.

For details not elaborated upon in the above embodiments, please refer to the descriptions in the method embodiments, which will not be repeated here.

Please refer to FIG. 11, which illustrates a schematic structural diagram of a network device 1100 provided in an embodiment of the present disclosure. The network device 1100 can be used to perform the method operations performed by a network device in the above embodiments. The network device 1100 may include a processor 1101, a transceiver 1102, and a memory 1103. The transceiver 1102 is configured to implement a transmitting function or a receiving function, for example, implement the functions of the above-mentioned transmitting module 910 and/or receiving module 920. The processor 1101 can be configured to implement other processing functions or for controlling a transmission and/or reception.

The processor 1101 includes one or more processing cores, and the processor 1101 executes various functional applications and information processing by running software programs and modules.

The transceiver 1102 may include a receiver and a transmitter. For example, the transceiver 1102 may include a wired communication component, which may include a wired communication chip and a wired interface (e.g., a fiber optic interface). Optionally, the transceiver 1102 may also include a wireless communication component, which may include a wireless communication chip and a radio frequency antenna.

The memory 1103 may be connected to the processor 1101 and the transceiver 1102.

The memory 1103 can be configured to store computer programs executed by the processor, and the processor 1101 is configured to execute the computer programs to implement various operations performed by the network device in the above method embodiments.

In addition, the memory 1103 may be implemented by any type of volatile or non-volatile storage device or a combination thereof, where the volatile or non-volatile storage device includes but not limited to: a magnetic disk or an optical disc, an electrically erasable programmable read-only memory, an erasable programmable read-only memory, a static random-access memory, a read-only memory, a magnetic memory, a flash memory, and a programmable read-only memory.

In some embodiments, the transceiver 1102 is configured to: in a case where power control of an SRS is independent of power control of an uplink data channel, transmit first control information to a terminal device, the first control information being used for adjusting a transmit power of the SRS, where the first control information is used for determining a transmit power of an SRS corresponding to at least one closed-loop power control adjustment state set among at least two closed-loop power control adjustment state sets maintained by the terminal device.

For details not elaborated upon in the embodiment, please refer to the above embodiments, which will not be repeated here.

The embodiments of the present disclosure further provide a computer-readable storage medium, where the computer-readable storage medium stores a computer program. The computer program is configured to, when executed by a processor of a terminal device, implement the above SRS closed-loop power control method on the terminal device side.

The embodiments of the present disclosure further provide a computer-readable storage medium, where the computer-readable storage medium stores a computer program. The computer program is configured to, when executed by a processor of a network device, implement the above SRS closed-loop power control method on the network device side.

In some embodiments, the computer-readable storage medium may include a read-only memory (ROM), a random-access memory (RAM), a solid state drive (SSD), or an optical disc, etc. The RAM may include a resistance random access memory (ReRAM) and a dynamic random access memory (DRAM).

The embodiments of the present disclosure further provide a chip, which includes a programmable logic circuit and/or program instructions, where the chip, when run on a terminal device, is configured to implement the above SRS closed-loop power control method on the terminal device side.

The embodiments of the present disclosure further provide a chip, which includes a programmable logic circuit and/or program instructions, where the chip, when run on a network device, is configured to implement the above SRS closed-loop power control method on the network device side.

The embodiments of the present disclosure further provide a computer program product or a computer program, where the computer program product or the computer program includes computer instructions stored in a computer-readable storage medium, and a processor of a terminal device reads the computer instructions from the computer-readable storage medium and executes the computer instructions to implement the above SRS closed-loop power control method on the terminal device side.

The embodiments of the present disclosure further provide a computer program product or a computer program, where the computer program product or the computer program includes computer instructions stored in a computer-readable storage medium, and a processor of a network device reads the computer instructions from the computer-readable storage medium and executes the computer instructions to implement the above SRS closed-loop power control method on the network device side.

It should be understood that that the term "indicate/indicated/indicating/indication" mentioned in the embodiments of the present disclosure may be a direct indication, may also be an indirect indication, or may mean that there is an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the description of the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

In some embodiments of the present disclosure, "predefined" may be implemented by pre-saving corresponding codes, tables or other manners that may be used to indicate related information in devices, and a specific implementation manner thereof is not limited in the present disclosure. For example, the pre-defined may refer to what is defined in a protocol.

In some embodiments of the present disclosure, the "protocol" may refer to a standard protocol in the communication field. For example, the "protocol" may include an LTE protocol, an NR protocol, and a related protocol used in a future communication system, which is not limited in the present disclosure.

The term "multiple/a plurality of" mentioned herein refers to two or more. The term "and/or" is an association relationship to describe associated objects, which indicates that there may be three kinds of relationships. For example, "A and/or B" may mean three cases where: A exists alone, both A and B exist, and B exists alone. The character "/" generally means that associated objects before and after "/" are in an "or" relationship.

In addition, the operation numbering described herein merely exemplarily illustrates a possible execution order of the operations. In other embodiments, the above operations may also be executed not in the numbered order, for example, two operations with different numbers are executed simultaneously, or two operations with different numbers are executed in the reverse order of that shown in the figure. The embodiments of the present disclosure are not limited thereto.

A person skilled in the art should be aware that, in one or more of the above examples, the functions described in the embodiments of the present disclosure can be implemented by hardware, software, firmware, or any combination thereof. When implemented by the software, these functions can be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another place. The storage medium may be any available medium that can be accessed by a general-purpose computer or a special-purpose computer.

The foregoing are only exemplary embodiments of the present disclosure and are not intended to limit the present disclosure. Any modification, equivalent substitution, or improvement, etc., made within the spirit and the principle of the present disclosure shall be included within the protection scope of the present disclosure.

## Claims

1. A sounding reference signal (SRS) closed-loop power control method, performed by a terminal device and comprising:
in a case where power control of an SRS is independent of power control of an uplink data channel, maintaining at least two closed-loop power control adjustment state sets for the SRS.

2. The method according to claim 1, further comprising:
transmitting first capability information, wherein the first capability information is used for indicating whether the terminal device maintains the at least two closed-loop power control adjustment state sets for the SRS.

3. The method according to claim 2, wherein in a case where the terminal device maintains the at least two closed-loop power control adjustment state sets for the SRS, the first capability information is further used for indicating a respective maximum number of closed-loop power control adjustment states corresponding to each of N carriers, N being an integer greater than or equal to 1.

4. The method according to any one of claims 1 to 3, further comprising:
receiving first control information, wherein the first control information is used for adjusting a transmit power of the SRS; and
determining a transmit power of an SRS corresponding to at least one closed-loop power control adjustment state set among the at least two closed-loop power control adjustment state sets according to the first control information.

5. The method according to claim 4, wherein the first control information comprises a respective transmit power control (TPC) command and a respective piece of first index indication information corresponding to each of N carriers, wherein first index indication information corresponding to an i-th carrier among the N carriers is used for indicating an index of a closed-loop power control adjustment state corresponding to the i-th carrier, N being an integer greater than or equal to 1, and i being a positive integer less than or equal to N.

6. The method according to claim 5, wherein determining the transmit power of the SRS corresponding to the at least one closed-loop power control adjustment state set among the at least two closed-loop power control adjustment state sets according to the first control information comprises:
for the i-th carrier, determining a transmit power of an SRS corresponding to the i-th carrier according to a TPC command corresponding to the i-th carrier and the closed-loop power control adjustment state corresponding to the i-th carrier.

7. The method according to claim 4, wherein the first control information comprises a respective TPC command and a respective piece of second index indication information corresponding to each of N carriers, wherein second index indication information corresponding to an i-th carrier among the N carriers is used for indicating an index of a transmission configuration indicator (TCI) state corresponding to the i-th carrier, and an indicated TCI state has a correspondence relationship with a closed-loop power control adjustment state, N being an integer greater than or equal to 1, and i being a positive integer less than or equal to N.

8. The method according to claim 7, wherein determining the transmit power of the SRS corresponding to the at least one closed-loop power control adjustment state set among the at least two closed-loop power control adjustment state sets according to the first control information comprises:
for the i-th carrier, determining a closed-loop power control adjustment state corresponding to the i-th carrier according to the indicated TCI state corresponding to the i-th carrier and the correspondence relationship between the indicated TCI state and the closed-loop power control adjustment state; and
determining a transmit power of an uplink channel corresponding to the i-th carrier or an uplink signal corresponding to the i-th carrier according to a TPC command corresponding to the i-th carrier and the closed-loop power control adjustment state corresponding to the i-th carrier, wherein the uplink channel or the uplink signal comprises the SRS.

9. The method according to claim 8, wherein the uplink channel or the uplink signal further comprises at least one of an uplink control channel or an uplink data channel.

10. The method according to any one of claims 7 to 9, wherein the TCI state is an uplink TCI state or a joint TCI state.

11. The method according to any one of claims 1 to 3, further comprising:
receiving first configuration information, wherein the first configuration information is used for configuring whether the power control of the SRS is independent of the power control of the uplink data channel.

12. The method according to claim 11, further comprising:
in a case where the first configuration information is used for configuring the power control of the SRS to be independent of the power control of the uplink data channel, determining a transmit power of the SRS based on first control information, wherein the first control information is used for adjusting the transmit power of the SRS;
or
in a case where the first configuration information is used for configuring the power control of the SRS to follow the power control of the uplink data channel, determining a transmit power of the uplink data channel based on second control information, wherein the transmit power of the SRS is the same as the transmit power of the uplink data channel, and the second control information is used for adjusting the transmit power of the uplink data channel.

13. The method according to any one of claims 1 to 12, wherein each closed-loop power control adjustment state set among the at least two closed-loop power control adjustment state sets corresponds to a device having an uplink receiving function or a node having an uplink receiving function.

14. A sounding reference signal (SRS) closed-loop power control method, performed by a network device and comprising:
in a case where power control of an SRS is independent of power control of an uplink data channel, transmitting first control information to a terminal device, the first control information being used for adjusting a transmit power of the SRS, wherein the first control information is used for determining a transmit power of an SRS corresponding to at least one closed-loop power control adjustment state set among at least two closed-loop power control adjustment state sets maintained by the terminal device.

15. The method according to claim 14, further comprising:
receiving first capability information transmitted by the terminal device, wherein the first capability information is used for indicating whether the terminal device maintains the at least two closed-loop power control adjustment state sets for the SRS.

16. The method according to claim 15, wherein in a case where the terminal device maintains the at least two closed-loop power control adjustment state sets for the SRS, the first capability information is further used for indicating a respective maximum number of closed-loop power control adjustment states corresponding to each of N carriers, N being an integer greater than or equal to 1.

17. The method according to any one of claims 14 to 16, wherein the first control information comprises a respective transmit power control (TPC) command and a respective piece of first index indication information corresponding to each of N carriers, wherein first index indication information corresponding to an i-th carrier among the N carriers is used for indicating an index of a closed-loop power control adjustment state corresponding to the i-th carrier, N being an integer greater than or equal to 1, and i being a positive integer less than or equal to N.

18. The method according to any one of claims 14 to 16, wherein the first control information comprises a respective TPC command and a respective piece of second index indication information corresponding to each of N carriers, wherein second index indication information corresponding to an i-th carrier among the N carriers is used for indicating an index of a transmission configuration indicator (TCI) state corresponding to the i-th carrier, and an indicated TCI state has a correspondence relationship with a closed-loop power control adjustment state, N being an integer greater than or equal to 1, and i being a positive integer less than or equal to N.

19. The method according to claim 18, wherein an uplink channel or an uplink signal further comprises at least one of an uplink control channel or an uplink data channel.

20. The method according to claim 18 or 19, wherein the TCI state is an uplink TCI state or a joint TCI state.

21. The method according to any one of claims 14 to 16, further comprising:
transmitting first configuration information to the terminal device, wherein the first configuration information is used for configuring whether the power control of the SRS is independent of the power control of the uplink data channel.

22. The method according to claim 21, further comprising:
in a case where the first configuration information is used for configuring the power control of the SRS to be independent of the power control of the uplink data channel, performing an operation of transmitting the first control information to the terminal device;
or
in a case where the first configuration information is used for configuring the power control of the SRS to follow the power control of the uplink data channel, transmitting second control information to the terminal device, wherein the second control information is used for adjusting a transmit power of the uplink data channel, and the transmit power of the SRS is the same as the transmit power of the uplink data channel.

23. The method according to any one of claims 14 to 22, wherein each closed-loop power control adjustment state set among the at least two closed-loop power control adjustment state sets corresponds to a device having an uplink receiving function or a node having an uplink receiving function.

24. A sounding reference signal (SRS) closed-loop power control apparatus, comprising:
a processing module, configured to: maintain at least two closed-loop power control adjustment state sets for an SRS, in a case where power control of the SRS is independent of power control of an uplink data channel.

25. A sounding reference signal (SRS) closed-loop power control apparatus, comprising:
a transmitting module, configured to: transmit first control information to a terminal device in a case where power control of an SRS is independent of power control of an uplink data channel, the first control information being used for adjusting a transmit power of the SRS, wherein the first control information is used for determining a transmit power of an SRS corresponding to at least one closed-loop power control adjustment state set among at least two closed-loop power control adjustment state sets maintained by the terminal device.

26. A communication device, comprising: a processor and a memory, wherein the memory stores a computer program, and the processor executes the computer program to implement the method according to any one of claims 1 to 13 or the method according to any one of claims 14 to 23.

27. A computer-readable storage medium, storing a computer program, wherein the computer program is configured to, when executed by a processor, implement the method according to any one of claims 1 to 13 or the method according to any one of claims 14 to 23.

28. A chip, comprising a programmable logic circuit and/or program instructions, wherein the chip, when running, is configured to implement the method according to any one of claims 1 to 13 or the method according to any one of claims 14 to 23.

29. A computer program product, comprising computer instructions stored in a computer-readable storage medium, wherein a processor reads the computer instructions from the computer-readable storage medium and executes the computer instructions to implement the method according to any one of claims 1 to 13 or the method according to any one of claims 14 to 23.
